Europäisches Patentamt

European Patent Office

Office européen des brevets

(11) Publication number: **0 275 628 B1**

# EUROPEAN PATENT SPECIFICATION

(45) Date of publication of patent specification: **09.12.92**  (51) Int. Cl.⁵: **A61B 5/0408**, B32B 15/08

(21) Application number: **87308077.4**

(22) Date of filing: **11.09.87**

(54) **Conductive electrode having a connection portion.**

(30) Priority: **24.12.86 JP 201177/86**

(43) Date of publication of application:
**27.07.88 Bulletin 88/30**

(45) Publication of the grant of the patent:
**09.12.92 Bulletin 92/50**

(84) Designated Contracting States:
**DE FR GB**

(56) References cited:
**EP-A- 0 181 057**
**FR-A- 2 345 981**
**US-A- 4 172 745**
**US-A- 4 393 584**

(73) Proprietor: **NITTO DENKO CORPORATION**
**1-2, Shimohozumi 1-chome Ibaraki-shi**
**Osaka(JP)**

(72) Inventor: **Wada, Shintaro c/o Nitto Electric**
**Industrial Co., Ltd. 1-2, Shimohozumi**
**1-chome**
**Ibaraki-shi Osaka(JP)**
Inventor: **Nomura, Yoichi c/o Nitto Electric**
**Industrial Co., Ltd. 1-2, Shimohozumi**
**1-chome**
**Ibaraki-shi Osaka(JP)**
Inventor: **Takahashi, Hisanori c/o Nitto Elec-**
**tric**
**Industrial Co., Ltd. 1-2, Shimohozumi**
**1-chome**
**Ibaraki-shi Osaka(JP)**
Inventor: **Konno, Masayuki c/o Nitto Electric**
**Industrial Co., Ltd. 1-2, Shimohozumi**
**1-chome**
**Ibaraki-shi Osaka(JP)**

(74) Representative: **Diamond, Bryan Clive et al**
**Gee & Co., Chancery House, Chancery Lane**
**London WC2A 1OU(GB)**

## Description

The present invention relates to an electrode which is suitable for use as, for example, a biomedical electrode or a connector to remove static electricity on a material to be bonded or to electrically connect materials to be bonded.

As an electrode to be attached or fixed to the skin surface of a patient to transmit an electrical signal from the living skin to a medical or diagnostic equipment, or a connector to remove static electricity on the surface of a material to be bonded or to electrically connect materials to be bonded, it is known to make an electrode with a terminal portion which is provided with a clip, a hook or a connector terminal for insertion of a pin.

In such electrode, however, the main body and connector terminal are formed separately. Thus, there are multiple parts, the number of production steps is increased and manufacturing costs therefore are increased.

Particularly when such electrode is used as an electrode for medical diagnosis, various problems arise. For example, since the electrode comprises the main body and a connector terminal attached to the edge of the main body, when the connector terminal is erected and connected to the terminal of medical or diagnostic equipment, the electrode bonded to the skin becomes raised at the point of the connector terminal and peeled off, resulting in the generation of stress due to force between the connector terminal portion and the skin surface; when the connector terminal portion is peeled off, the attachment of the electrode becomes insufficiently low, and the stability of electric signals is lost. This phenomenon cannot be neglected when the electrode is used for long term radical monitoring.

In order to overcome the problems of such electrode, the applicant proposed a biomedical electrode wherein the electrode plate has a cut therein which provides a tongue to be connected to a clip or the like, for a connector terminal portion, as disclosed in EP-A-0181057 and U.S. Patent 4,679,563. In this electrode, the tongue must be raised for use. However, the tongue cannot be easily raised and such action is complicated since the tongue is provided at the same level as that of the electrode plate. Therefore, the improvement of such electrode has been desired.

It has now been found that a cut can be provided in an electrode so that upon irradiation of heat or radiation on the cut portion, the cut portion shrinks and projects outwards, and the projected portion can be used as a connector terminal to the terminal of equipment to be connected thereto.

The electrode according to the present invention comprises an electrically conductive foil or sheet as substrate and a shrinkable layer provided on the substrate, wherein a cut is provided in the electrode so as to form a connection terminal portion projecting outwards upon shrinkage of the shrinkable layer.

The electrically conductive substrate used in the present invention is preferably a flexible material. The type of substrate is not critical so long as it is an electrically conductive foil or sheet (film), e.g. of metal or a laminate of metal and a synthetic polymer, film or sheet.

Preferred embodiments of such electrically conductive substrates are shown below.

(1) The substrate is a foil or sheet having a thickness of 10 to 500 $\mu$m which is made of platinum, gold, silver, copper, zinc, tin , aluminum, nickel, indium or alloys of combinations of the above metals, or alloys made mainly of the above metals, or stainless steel.

(2) The substrate is a laminate comprising a metal foil and a reinforcing plastic film provided on one side of the metal foil. The metal foil is made of platinum, gold, silver, copper, zinc, tin, aluminum, nickel, indium or alloys of the above metals, or alloys made mainly of the above metals, or stainless steel. The metal foil has a thickness of 10 $\mu$m or less. The plastics film can be made of at least one synthetic resin selected from polyolefins such as polyethylene and polypropylene, polyesters such as polyethylene terephthalate, ethylene-vinyl acetate copolymers, polyvinyl chloride, polyvinylidene chloride, polyvinyl formal, polytetrafluoroethylene, acrylic resins, polyurethanes, polyamides and polyimides.

(3) The substrate is made of a plastics film, paper, woven or unwoven fabrics with a metal deposited layer, a non-electrolytic plated layer or a metal foil laminated thereon. The plastics film can be made of the synthetic resins listed in (2) above. Paper, woven or unwoven fabrics which can be used include those made of synthetic resins, cellulose or cotton cloth.

Coated on the substrate is a shrinkable layer which shrinks in one direction upon irradiation of heat or radiation to cause the connection terminal portion or tongue as described hereinafter to project outwards. A suitable heat source, is a hot air source, e.g., a drier, a heating iron or an infrared heater. As suitable irradiation, at least one of sun light, ultraviolet rays and electron rays can be used.

The shrinkable layer shrinks slightly over the whole substrate but it remains adherent thereto; the degree of shrinkage can be adjusted to prevent curling thereof except at the cut portion; and the adhesive layer also assists this.

The heat-shrinkable layer can be a sheet (or film), a foamed layer or woven or unwoven fabrics which are made of a polybutadiene, polyisoprene, chloroprene, polyester, polyvinyl chloride, polypropylene, polyethylene, ethylene-vinyl acetate copolymer, polyvinyl chloride, polyvinyl formal, polytetrafluoroethylene, an acrylic resin, a polyurethane, a polyamide, a polyimide or copolymers made mainly of the above monomers.

The shrinkable layer may be provided by laminating a sheet on the electrically conductive substrate, or coating a paint of a coating composition of one of the above resins on the substrate, and allowing the solvent to evaporate.

As a layer which hardens or cross-links upon irradiation of radiation, thereby shrinking, those made of an acrylic resin, polyester, polyurethane or acrylic oligomer, polyester oligomer, polyurethane oligomer, or monomers thereof can be used.

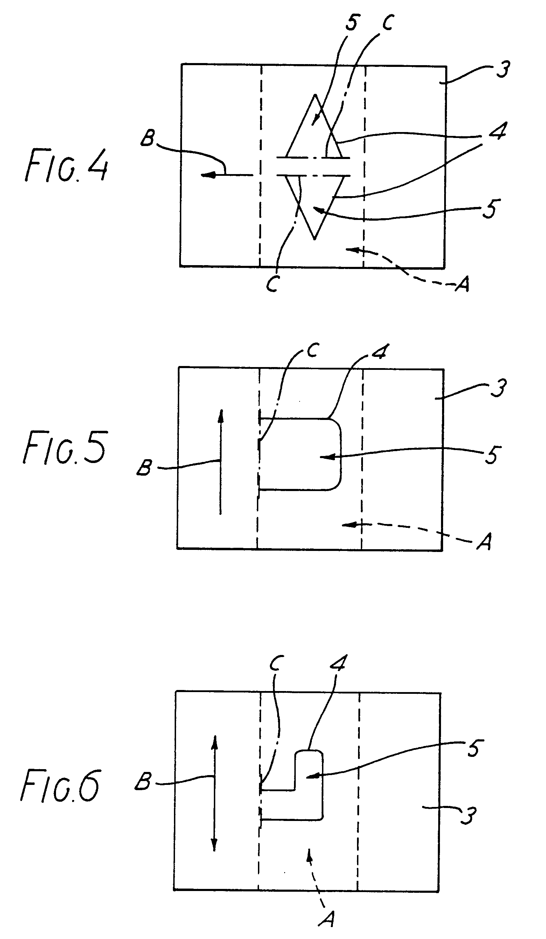

When the shrinkable layer had been laminated on the substrate, a cut is made in that layer and in the substrate so as to form a conductive connection terminal portion or tongue which projects outwards upon subsequent shrinkage of the shrinkable layer. The cut makes the portion curl and project outwards in use, and the projected portion serves as a tongue for connecting to a terminal of the unit to be connected, e.g., equipment for medical or diagnostic attention. The structure of the cut is not critical so long as it is such that the cut portion, curls and thereby projects outwards. The cut may be formed in any desired form (see Figs. 4 to 9) such as in a nearly U-shaped form, or nearly V-shaped form, in the form of a hook, or two lines may be cut parallel with each other with a suitable clearance between them from the end of the shrinkable layer.

If the direction of a line connecting the base end of the cut in the tongue is formed so as to form an angle of 0 to 60° relative to the direction of shrinkage of the shrinkable layer, there can be obtained an advantage that even if the weight of the terminal (e.g. a clip) or any load is applied when or after the cut portion, i.e., tongue is connected to the terminal (e.g., a clip) of the medical or diagnostic equipment, break-down from the base end of the cut in the tongue can be prevented efficiently.

So long as the cut portion in the shrinkable layer, i.e., the strength of the tongue portion, is sufficiently high, the direction in which the connection terminal portion is formed is not critical. However, it is preferred to provide the cut in the manner as described above because because even if an unexpected great tearing force is applied during the handling such as connection to the equipment, no break-down occurs and as a result, handling becomes easy.

In a case where the shrinkable layer is formed by biaxial stretching, the aforesaid shrinkage direction is the direction in which the shrinkage ratio is higher.

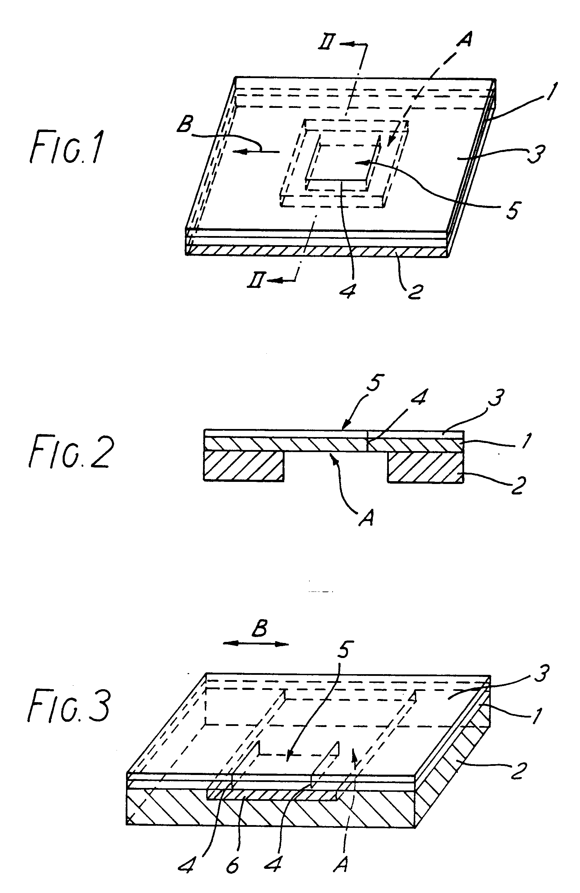

In order to electrically connect and adhere the substrate to the skin, an electrically conductive adhesive layer is preferably provided on the surface of the electrically conductive substrate on ,which the shrinkable layer is not provided (as shown in Figs. 1 to 3). It is preferred that the adhesive layer be provided on areas other than the connection tongue of the electrically conductive substrate because thus, when the shrinkable layer is shrunk, the cut tongue can be easily projected outwardly.

Such electrically conductive adhesive layer can be formed by using a mixture of a conductivity-imparting substance, such as various metal powders, carbon powder or an aqueous solution of potassium chloride or sodium chloride (electrolyte), and an adhesive agent such as a polysaccharide, semi-synthetic polymer such as various celluloses, or synthetic polymer such as polyacrylic acid and/or its salts, polyacrylic acid ester derivatives, polyvinyl alcohol or other hydrophilic polymers.

Before forming the electrically conductive adhesive layer on the conductive substrate, a non-adhesive liner layer (such as a polyester film) which does not adhere to the terminal portion may be provided between the substrate and the adhesive layer on areas corresponding to the desired portion. The liner layer can desirably be made of a cellular foamed material in compressed form in order to cause easy erection of the tongue (and see Figs. 6 and 7 of EP 0181057).

In the described electrode of the invention, the cut portion rolls up easily, projecting outwards when the shrinkable layer is shrunk. In the case of a monoaxially stretched film in which the shrinkage is caused in a certain direction, it is preferred that the cut be provided in the direction in which the shrinkage occurs, because the outward projection is thereby accelerated.

The projected tongue portion can be electrically connected as a terminal portion to the terminal (e.g., a clip) of apparatus to be connected. Thus, the connection can be simplified. Furthermore, since a clip, hook or pin, as a separate component is not attached to the adhesive electrode, the number of parts is decreased and the assembly is not bulky so that its wrapping, transport and storage is easy and inexpensive.

When the electrode of the present invention is used as a biomedical electrode, the projected tongue can be easily connected to the terminal of the medical or diagnostic equipment. Furthermore, since the force exerted in the direction in which the electrode is peeled off at the time of connection is absorbed by the action that the cut portion rolls up, no peeling force is exerted onto the electrode itself, as a result of which no stress is formed on the skin surface and the electrode can be used stably for a long time.

The present invention will hereinafter be explained in detail by reference to the drawings, wherein:

Figure 1 is a perspective view of an electrode according to the present invention but before the heat treatment;

Figure 2 is a cross-sectional view taken along line II-II in the electrode shown in Fig. 1;

Figure 3 is a perspective view of another embodiment;

Figures 4 to 9 each is a plan view of other embodiments; and

Figure 10 is a cross-section of a finished electrode showing a clip attached to the connection tongue thereof.

In Figs. 1 to 9, the electrode comprises a flexible electrically conductive substrate (1), and an electrically adhesive layer (2) provided on the back of the electrically conductive substrate (1) except at an area A; and a shrinkable layer (3) provided on the top of the electrically conductive substrate (1). The cut (4) defines a tongue area (5) which curls so as to project outwards (Fig. 10) after heat treatment.

The non-adhesive area (A) may be formed in the following manners. The area (A) is formed in a rectangular form in the central portion of the electrically conductive substrate (1) except for the electrically conductive adhesive layer (2), as shown in Figs. 1 and 2. A non-adhesive liner layer (6) is provided between the electrically conductive substrate (1) and the electrically adhesive layer (2) so that the electrically adhesive layer (2) is not substantially bonded to the electrically conductive substrate (1), as shown in Fig. 3. The area (A) is formed in the middle portion of the electrically conductive substrate (1) except for the electrically conductive adhesive layer (2), as shown in Figs. 4 to 9.

In this case, the electrically conductive substrate (1) is suitably a copper foil having a thickness of 100 $\mu$m. The electrically conductive adhesive layer (2) can be made of an acrylic-based adhesive with silver powder added and mixed. The non-adhesive liner layer (6) is formed by providing a non-adhesive foamed material in a compressed state so that the repulsion force of the layer (6) makes easier the rolling-up of the cut portion, to form the connection terminal portion.

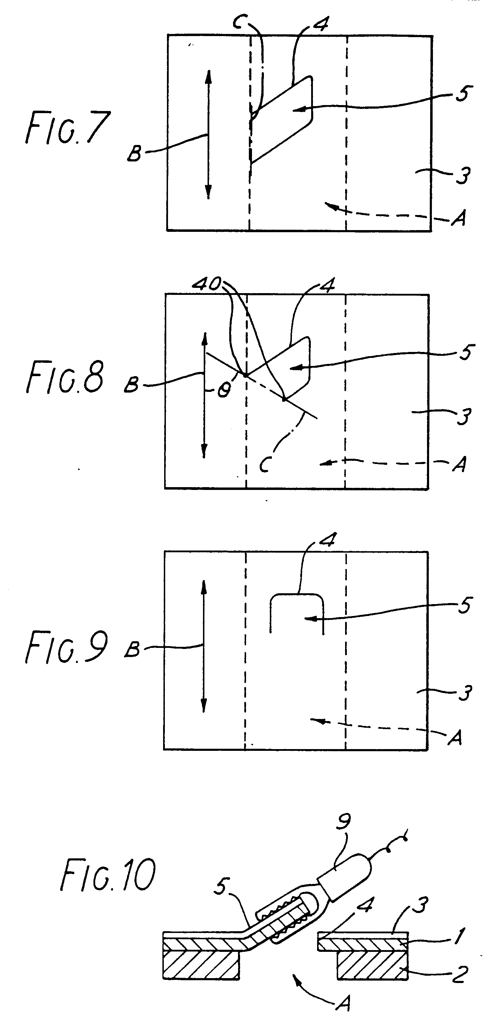

In this case, the shrinkable layer (3) is made of a heat-shrinkable polyvinyl chloride resin. In the shrinkable layer (3) and the electrically conductive substrate (1), the tongue or connection terminal portion (5) produced by the cut (4) is provided at a position corresponding to the above non-adhesive area (A). As shown in Fig. 8, the tongue is designed such that the direction (C) of line connecting the base ends (40, 40) of the cut (4) is at an angle of 0 to 60° relative to the direction of shrinkage of the shrinkable layer (3), i.e. the direction of arrow B. Thus, the tongue (5) rolls up, thereby projecting outwards due to the shrinkage of the shrinkable layer (3) (heat shrinkage in this case).

The possible shapes of the tongue (5) will be explained in more detail below.

As shown in Figs. 1 and 2, the connection terminal portion (5) may be formed by cutting both the shrinkable layer (3) and the electrically conductive substrate (1) in the direction of thickness in a U-shaped form at the position corresponding to the non-adhesive area (A). As shown in Fig. 3, at the non-adhesive area (A) formed by providing the non-adhesive liner layer (6) between the electrically conductive substrate (1) and the electrically adhesive layer (2), two lines are formed parallel with each other at a suitable interval from the end thereof and further in both the electrically conductive substrate (1) and the shrinkable layer (3) in the direction of thickness thereof to thereby form the cut (4). As shown in Fig. 4, two cuts (4) in V-shaped form may be formed in such a manner that the base ends of the cuts faces each other. As shown in Fig. 5, when the portion is provided by the cut on nearly the center of the non-adhesive area (A), the cut may be formed in such a manner that the base end of the cut (4) is positioned at the edge of the non-adhesive area (A). As shown in Fig. 6, the cut (4) may be formed in a hook-like form. In all cases, the tongue (5) is formed such that the angle between the direction of shrinkage (direction of arrow B) of the shrinkable layer (3) and the direction of the line connecting the ends of the cut (direction C) is 0° (i.e. the directions are parallel).

Instead of the above embodiments, the tongue (5) may be formed as follows. As shown in Fig. 7, the connection terminal portion (5) may be formed such that it is at a slanted angle to the direction of shrinkage of the shrinkable layer (3) (direction of arrow B). As shown in Fig. 8, the direction (C) of line connecting the base ends of the cut (4) in the connection terminal portion (5) is at an angle of up to 60° relative to the direction of shrinkage (B) of the shrinkable layer (3), in this case, at an angle of 60°.

To the resultant projecting tongue (5) formed by heat treatment a clip (9) as shown in Fig. 10 can be attached.

In the above embodiments, as the shrinkable layer (3), a heat-shrinkable polyvinyl chloride resin is used. In place of the polyvinyl chloride resin, other heat-shrinkable layers can be used. Furthermore, in place of the heat-shrinkable layers, shrinkable layers which shrink upon irradiation of radiations can be used.

In the above construction, a non-shrinkable material can be used for a further outer layer, and consequently, the material can be chosen from a greatly broadened range provided it does not disturb shrinkage of the shrinkable layer and that it is not too thick.

Furthermore, as the electrically conductive substrate, other metal foils than copper metal sheets, or laminated sheets of metal and a film or sheet of a synthetic resin (polymer) can be used; with a laminate, the shrinkable layer should be on the resin side.

In the present invention the number of parts of the electrode is decreased, the number of production steps is small, production is simple, continuous production is possible, and productivity is excellent. Further, the present invention has the effect that in electrical connection, the connection of the projecting tongue to a terminal of the equipment to be connected is ensured.

## Claims

1. An electrode intended to be placed on a test site, which comprises a flexible electrically conductive sheet or foil as substrate (1) and an electrically conductive tongue (5) for connection of the electrode to apparatus to receive a signal therefrom, which tongue is formed by a cut (4) in the substrate, characterised in that on the substrate is provided a layer (3) which has been shrunk in at least one direction when it was subjected to heat or an electromagnetic radiation whereby the tongue is caused to curl and project outwardly.

2. An electrode as claimed in Claim 1, wherein the shrinkable layer (3) is a sheet or film, foamed layer or fabric of synthetic polymer or copolymer.

3. An electrode as claimed in Claim 2, wherein the shrinkable layer (3) was formed by coating a coating composition of a synthetic polymer in a solvent and allowing the solvent to evaporate.

4. An electrode as claimed in Claim 2, wherein the shrunken layer (3) was formed by irradiating to crosslink a layer of an acrylic resin, polyester, polyurethane or oligomer thereof.

5. An electrode as claimed in any preceding claim, wherein the substrate (1) is a laminate of an electrically conductive layer and a non-conductive polymer, paper or fabric, and the shrunken layer (3) is formed on the non-conductive layer of the laminate.

6. An electrode as claimed in any preceding claim, having on the surface of the substrate (1) not covered by the shrunken layer (3) an electrically conductive adhesive layer (2) except at the area of the tongue (5).

7. An electrode as claimed in any preceding claim, wherein the direction of shrinkage of the shrunken layer (3) is at an angle of 0 to 60° to the direction of a straight line connecting the two ends of the cut (4).

8. An electrode as claimed in any preceding claim, wherein the tongue (5) has a hook shape.

9. An electrode as claimed in any preceding claim, together with a terminal member for receiving electrical signals affixed to the projecting tongue (5) thereof.

## Patentansprüche

1. Elektrode, dazu bestimmt, auf eine Teststelle gesetzt zu werden, umfassend ein flexibles elektrisch leitendes Blatt oder eine flexible elektrisch leitende Folie als Substrat (1) und eine elektrisch leitende Zunge (5) für den Anschluß der Elektrode an einen Apparat zum Empfangen eines Signals von der Elektrode, wobei die Zunge durch einen Schnitt (4) in dem Substrat gebildet wird, **dadurch gekennzeichnet,** daß auf dem Substrat eine Schicht (3) bereitgestellt wird, die in wenigstens einer Richtung aufgeschrumpft wird, nachdem sie Hitze oder einer elektromagnetischen Strahlung ausgesetzt wurde, wodurch bewirkt wird, daß sich die Zunge aufbiegt und nach außen hervorragt.

2. Elektrode nach Anspruch 1, worin die schrumpffähige Schicht (3) ein Blatt oder eine Folie, eine geschäumte Schicht oder eine textile Fläche eines synthetischen Polymers oder Copolymers ist.

3. Elektrode nach Anspruch 2, worin die schrumpffähige Schicht (3) durch Beschichten eines Beschichtungsmaterials aus einem synthetischen Polymer in einem Lösungsmittel und durch Verdampfenlassen des Lösungsmittels gebildet wurde.

4. Elektrode nach Anspruch 2, worin die aufgeschrumpfte Schicht (3) durch Bestrahlen zur Vernetzung einer Schicht eines Acrylharzes, Polyesters, Polyurethans oder Oligomerer davon gebildet wurde.

5. Elektrode nach einem der vorhergehenden Ansprüche, worin das Substrat (1) ein Laminat einer elektrisch leitenden Schicht und eines nichtleitenden Polymers, Papiers oder Gewebes ist, und die aufgeschrumpfte Schicht (3) auf der nichtleitenden Schicht des Laminats ausgebildet ist.

6. Elektrode nach einem der vorhergehenden Ansprüche mit einer elektrisch leitenden, haftfähigen Schicht (2) auf derjenigen Oberfläche des Substrats (1), die nicht von der aufgeschrumpften Schicht (3) bedeckt ist, außer im Bereich der Zunge (5).

7. Elektrode nach einem der vorhergehenden Ansprüche, worin der Winkel der Aufschrumpfungsrichtung der aufgeschrumpften Schicht (3) zu der Richtung einer Geraden, die die zwei Enden des Schnittes (4) verbindet, zwischen 0 und 60 ° beträgt.

8. Elektrode nach einem der vorhergehenden Ansprüche, worin die Zunge (5) eine Hakenform besitzt.

9. Elektrode nach einem der vorhergehenden Ansprüche zusammen mit einem endständigen Teil zum Empfangen elektrischer Signale, angeheftet an die von der Elektrode hervorragende Zunge (5).

**Revendications**

1. Electrode destinée a être placée sur un emplacement de test, qui comprend une feuille électro-conductrice, flexible, en tant que substrat (1) et une languette électro-conductrice (5) en vue de réaliser la connexion de l'électrode à un appareil afin de recevoir un signal de ce dernier, ladite languette étant formée par une découpe (4) dans le substrat, caractérisée par le fait qu'il est prévu sur le substrat une couche (3) qui s'est rétractée dans une direction au moins lorsqu'elle a été soumise à la chaleur ou à un rayonnement électromagnétique à la suite de quoi la languette s'est recourbée et est venue en saillie.

2. Electrode telle que revendiquée dans la revendication 1, dans laquelle la couche rétractable (3) est une feuille ou une pellicule, une couche de mousse ou un tissu en polymère ou copolymère synthétique.

3. Electrode telle que revendiquée dans la revendication 2, dans laquelle la couche rétractable (3) a été obtenue en déposant une composition de revêtement en polymère synthétique dissous dans un solvant et en laissant s'évaporer le solvant.

4. Electrode telle que revendiquée dans la revendication 2, dans laquelle la couche rétractable (3) a été obtenue par irradiation pour obtenir la réticulation d'une couche en résine acrylique, en polyester, en polyuréthane ou en oligomères de ceux-ci.

5. Electrode telle que revendiquée dans l'une quelconque des revendications précédentes, dans laquelle le support (1) est un laminé d'une couche électro-conductrice et d'un polymère non-conducteur, de papier ou de tissu, et la couche rétractée (3) est formée sur la couche non-conductrice du laminé.

6. Electrode telle que revendiquée dans l'une quelconque des revendications précédentes, ayant sur la surface du substrat (1) non couverte par la couche rétractée (3) une couche adhésive électro-conductrice (2), sauf au niveau de la surface de la languette (5).

7. Electrode telle que revendiquée dans l'une quelconque des revendications précédentes, dans laquelle la direction de rétraction de la couche rétractée (3) est suivant un angle compris entre 0 et 60° par rapport à la direction d'une ligne droite reliant les deux extrémités de la découpe (4).

8. Electrode telle que revendiquée dans l'une quelconque des revendications précédentes, dans laquelle la languette (5) présente une forme en crochet.

9. Electrode telle que revendiquée dans l'une quelconque des revendications précédentes, possédant un élément d'extrémité destiné à recevoir des signaux électriques, fixé à la languette (5) en saillie de celle-ci.

Fig.1

Fig.2

Fig.3

FIG.4

FIG.5

FIG.6

FIG.7

FIG.8

FIG.9

FIG.10